## Europäisches Patentamt

## European Patent Office

## Office européen des brevets

(19)

(11) Veröffentlichungsnummer : **0 074 941**
**B1**

(12)

# EUROPÄISCHE PATENTSCHRIFT

(45) Veröffentlichungstag der Patentschrift :
**10.09.86**

(51) Int. Cl.⁴ : **F 02 B 77/13**

(21) Anmeldenummer : **82890128.0**

(22) Anmeldetag : **13.09.82**

(54) Schallisolierende Anordnung einer Verbrennungskraftmaschine.

(30) Priorität : **11.09.81 AT 3944/81**

(43) Veröffentlichungstag der Anmeldung :
**23.03.83 Patentblatt 83/12**

(45) Bekanntmachung des Hinweises auf die Patenterteilung : **10.09.86 Patentblatt 86/37**

(84) Benannte Vertragsstaaten :
**AT BE CH DE FR GB IT LI LU NL SE**

(56) Entgegenhaltungen :
**DE-A- 1 804 607**
**DE-A- 2 912 386**
**DE-A- 2 913 648**
**FR-A- 2 170 753**
**GB-A- 2 025 520**

(73) Patentinhaber : **Kazda, Herbert, Dipl.-Ing. Dr.techn.**
**Kopfgasse 14**
**A-1130 Wien (AT)**

(72) Erfinder : **Kazda, Herbert, Dipl.-Ing. Dr.techn.**
**Kopfgasse 14**
**A-1130 Wien (AT)**

(74) Vertreter : **Kretschmer, Adolf, Dipl.-Ing. et al**
**Patentanwälte Dipl.Ing. A. Kretschmer Dr. Thomas M. Haffner Schottengasse 3a**
**A-1014 Wien (AT)**

**Beschreibung**

Die Erfindung bezieht sich auf eine schallisolierte Anordnung einer Verbrennungskraftmaschine, insbesondere einer Kolbenmaschine, welche von einem schalldämmenden Gehäuse unter Freilassung einer Lufteintrittsöffnung für Kühlluft und Verbrennungsluft und einer Luftaustrittsöffnung für die Abfuhr der Kühlluft allseitig umschlossen ist, für Kraftfahrzeuge, insbesondere Traktoren, wobei zumindest der untere Teil des schalldämmenden Gehäuses mit dem Fahrzeugrahmen bzw. Fahrzeugkörper starr verbunden ist. Insbesondere Kolben-Verbrennungskraftmaschinen entwickeln einen beträchtlichen Lärm. Aus der DE-A-29 12 386 ist es bekannt geworden, den von einer Verbrennungskraftmaschine gebildeten Motor eines Kraftfahrzeuges in einem schalldämmenden Gehäuse, welches den Motor allseitig unter Freilassung einer Lufteintrittsöffnung und einer Luftaustrittsöffnung umschließt, anzuordnen. Durch die Lufteintrittsöffnung tritt die Kühlluft über einen Wasserrückkühler in das schalldämmenden Gehäuse ein und wird durch einen Ventilator in das schalldämmende Gehäuse gedrückt, aus welchem sie dann über die Luftaustrittsöffnung entlang des Getriebes austritt. Da die Luft mittels des Ventilators durch das schalldämmende Gehäuse hindurchgedrückt werden muß, entsteht in diesem schalldämmenden Gehäuse ein gewisser Überdruck, wobei die unter Druck stehende Luft den Schall besser leitet. Da das Getriebe an den Motor angeflanscht ist und das Getriebe teilweise aus dem schalldämmenden Gehäuse herausragt, wird über das Getriebe der Körperschall nach außen übertragen. Der Boden des schalldämmenden Gehäuses ist von einem vorzugsweise abnehmbaren Deckel gebildet und der Motor muß daher am Chassis des Fahrzeuges gelagert sein. Es wird daher auch über das Chassis der Körperschall übertragen. Da die Luft in das schalldämmende Gehäuse gedrückt wird, entstehen überdies auch an verschiedenen Stellen des Innenraumes dieses Gehäuses Wärmenester, wodurch die Gefahr einer stellenweisen Überhitzung des Motors entsteht. Hiedurch wird die Brauchbarkeit eines solchen schalldämmenden Gehäuses an sich in Frage gestellt. Aus der GB-A-2 035 520 ist die Anordnung eines schalldämmenden Gehäuses bei einem Fahrzeugmotor bekannt geworden. Das schalldämmende Gehäuse ist starr mit dem Fahrzeugrahmen verbunden und der Motor ist in üblicher Weise am Fahrzeugrahmen gelagert. Es ist ein Saugventilator am vorderen Ende des Fahrzeuges vorgesehen, welcher die Luft aus dem schalldämmenden Gehäuse absaugt, und ein Druckventilator an der Hinterseite des Motors, welcher die Luft durch den Kühler hindurch ansaugt und in das Gehäuse drückt. Beide Ventilatoren sind aber so aufeinander abgestimmt, daß die Leistung des Druckventilators größer ist als die Leistung des Saugventilators und daß daher ein Überdruck im schalldämmenden Gehäuse aufrecht erhalten wird. Die Luft tritt aus dem schalldämmenden Gehäuse über einen großen Querschnitt frei aus, so daß der Schall aus dem schalldämmenden Gehäuse frei austreten kann.

Aus der DE-A-2 913 648 ist ein den Motor umgebendes schalldämmendes Gehäuse bekannt geworden, welches in einen Oberteil und einen Unterteil unterteilt ist. Der Oberteil ist aufklappbar und der Unterteil ist nach unten abklappbar. Der Motor ist daher am Fahrzeugrahmen gelagert und das schalldämmende Gehäse umschließt sowohl den Motor als auch das Getriebe. Die bekannten schalldämmenden Gehäuse ergeben keinen befriedigenden Effekt, da der Körperschall des Motors über die Lagerung desselben am Fahrzeugrahmen nach außen übertragen wird.

Die Erfindung stellt sich zur Aufgabe, die Lärmisolierung einer Verbrennungskraftmaschine gegenüber der Umgebung zu verbessern und vor allem eine Übertragung des Körperschalles des Motors auf andere Fahrzeugteile, welche dann den Körperschall nach außen weiterleiten, weitgehend zu unterbinden.

Zur Erfüllung dieser Aufgabe besteht die Erfindung im wesentlichen darin, daß der untere Teil des schalldämmenden Gehäuses so weit selbsttragend ausgebildet ist, daß er das Gewicht der Verbrennungskraftmaschine tragen kann, daß die Verbrennungskraftmaschine unter Zwischenschaltung von den Körperschall dämmenden Elementen an dem unteren Teil des schalldämmenden Gehäuses gelagert ist, daß bei schwimmend bzw. pendelnd gelagerter Verbrennungskraftmaschine diese relativ zum schalldämmenden Gehäuse beweglich ist und daß die Verbrennungskraftmaschine getrennt vom Getriebegehäuse in dem schalldämmenden Gehäuse gelagert ist und die Motorwelle bzw. die Kupplungswelle über eine Gelenkwelle mit dem Getriebe verbunden ist, wobei eine das Drehmoment auf das Getriebe übertragende Welle am schalldämmenden Gehäuse gelagert ist. Dadurch, daß der untere Teil des schalldämmenden Gehäuses selbsttragend ausgebildet ist, wird ermöglicht, die Verbrennungskraftmaschine am schalldämmenden Gehäuse zu lagern und nicht am Rahmen des Fahrzeuges, welcher einen Überträger für den Körperschall darstellen würde. Dadurch, daß die Verbrennungskraftmaschine unter Zwischenschaltung von den Körperschall dämmenden Elementen an diesem selbsttragenden unteren Teil des schalldämmenden Gehäuses gelagert ist, wird eine Übertragung des Körperschalles der Verbrennungskraftmaschine auf das schalldämmende Gehäuse weitgehend unterbunden und es wird vermieden, daß das schalldämmende Gehäuse als Resonanzkasten wirkt und damit die Übertragung des Körperschalles von der Verbrennungskraftmaschine nach außen noch begünstigt. Dadurch, daß die Verbrennungskraftmaschine getrennt vom Getriebegehäuse in dem schalldämmenden Gehäuse gelagert ist, können die Ausmaße des schalldämmenden Gehäuses auf ein Mindestmaß beschränkt werden und es wird eine Übertragung des Körperschalles der Verbrennungskraftmaschine auf das Getriebegehäuse vermieden. Die Antriebsverbindung mit dem Getriebe stellt nun eine wesentliche Möglichkeit der Übertragung des Körperschalles der Verbrennungskraftmaschine auf das Getriebegehäuse dar. Dadurch, daß die Kraftübertragung über eine Gelenkwelle erfolgt, welche am schalldämmenden Gehäuse gelagert ist, wird weiters auch einer Übertragung des Körperschalles der Verbrennungskraftmaschine auf das Getriebegehäuse, von welchem der Schall nach außen abgestrahlt wird, entgegengewirkt. Gemäß einer bevorzugten Ausführungsform der Erfindung ist das Getriebegehäuse an das schalldämmende Gehäuse angeflanscht, so daß Getriebegehäuse mit der Verbrennungskraftmaschine nicht in den Körperschall übertragender Verbindung steht.

Im Falle eines Traktors sind gemäß der Erfindung die Vorderräder am unteren Teil des schalldämmenden Gehäuses aufgehängt und das Hinterachsgehäuse tragende Getriebegehäuse ist an das schalldämmende Gehäuse angeflanscht. Es bildet somit das Getriebegehäuse bzw. der selbsttragende untere Teil desselben einen tragenden Teil des Traktors, von welchem ein Übertritt des Körperschalles der Verbrennungskraftmaschine zu den anderen Traktorteilen unterbunden ist.

Es bleibt somit nun nur die Möglichkeit einer Übertragung des Körperschalles über das Auspuffsystem auf das schalldämmende Gehäuse, welches als Resonanzkasten wirken würde, und damit auf die Umgebung. Um eine solche Übertragung des Körperschalles der Verbrennungskraftmaschine auf das schalldämmende Gehäuse weitgehend zu verhindern, ist gemäß der Erfindung vorzugsweise die Auspuffleitung über eine den Körperschall dämmende Halterung mit dem schallisolierenden Gehäuse verbunden und unter Zwischenschaltung eines flexiblen Kompensatorrohres, beispielsweise eines Faltenbalges aus Metall, an das Auspuffsammelrohr angeschlossen, welches innerhalb des schalldämmenden Gehäuses liegt. Durch die Kompensatorrohre wird vermieden, daß über die Auspuffleitung Körperschall vom Motor nach außen übertragen wird. Das Auspuffrohr mit den Auspufftöpfen muß außerhalb des schalldämmenden Gehäuses angeordnet sein. Dadurch aber, daß die Auspuffleitung über eine den Körperschall dämmende Halterung mit dem schalldämmenden Gehäuse verbunden ist, wird vermieden, daß Schwingungen des außen liegenden Auspuffrohres auf das schalldämmende Gehäuse übertragen werden, und es wird damit vermieden, daß dieses schalldämmende Gehäuse selbst nach Art eines Resonanzkastens den durch die Schwingungen des Auspuffrohres entstehenden Lärm verstärkt. Bei einer konstruktiven Ausführungsform wird dies dadurch bewirkt, daß das Auspuffrohr mit einem Quersteg ausgebildet ist, der über den Körperschall dämmende Zwischenlagen, beispielsweise Gummipuffer, mit dem schallisolierenden Gehäuse verbunden ist. Das Auspuffrohr soll aus dem selben Grund auch nicht starr mit dem schalldämmenden Gehäuse verbunden sein. Eine offene Durchtrittsöffnung für das Auspuffrohr durch das schalldämmende Gehäuse würde hiebei wieder einen Austritt des Luftschalles gestatten. Gemäß der Erfindung kann daher zwischen dem Auspuffrohr und der Durchtrittsöffnung für dasselbe im schalldämmenden Gehäuse eine Labyrinthdichtung vorgesehen sein.

Gemäß der Erfindung kann das Auspuffsammelrohr über flexible Kompensatorrohre, beispielsweise Faltenbälge aus Metall, an die Auspuffkanäle angeschlossen sein. Hiedurch wird die Schallbrücke schon zwischen Motor und Auspuffsammelrohr unterbrochen.

Gemäß der Erfindung kann vorzugsweise die Anordnung so getroffen sein, daß an der Luftaustrittsöffnung ein Saugventilator angeordnet ist, der die Kühlluft aus dem schalldämmenden Gehäuse absaugt und in diesem einen Unterdruck erzeugt und daß die Luftaustrittsöffnung durch eine unten offene, schalldämmende Verschalung (Hutze) abgeschirmt ist. Der Körperschall des Motors wird auch durch die im schalldämmenden Gehäuse enthaltene Luft auf das schalldämmende Gehäuse übertragen. Verdünnte Luft überträgt den Schall in geringerem Ausmaß als unter Überdruck stehende Luft. Dadurch, daß der Saugventilator die Kühlluft aus dem schalldämmenden Gehäuse absaugt und damit einen Unterdruck im Gehäuse erzeugt, wird auch die Übertragungsmöglichkeit über die Luft von der Verbrennungskraftmaschine auf das schalldämmende Gehäuse verringert. Dadurch, daß die abgesaugte Luft nicht unmittelbar aus dem schalldämmenden Gehäuse austritt, sondern in eine schalldämmende Verschalung (Hutze) strömt, wird auch eine Schallübertragung durch die ausströmende Luft verhindert und dadurch, daß diese schalldämmende Verschalung nach unten offen ist, wird, soweit der Schall austritt, dieser Schall nach unten zur Fahrbahn gelenkt, so daß er die Umgebung weniger beeinträchtigt.

In der Zeichnung ist die Erfindung anhand eines Ausführungsbeispieles schematisch erläutert, welches einen Traktor zeigt.

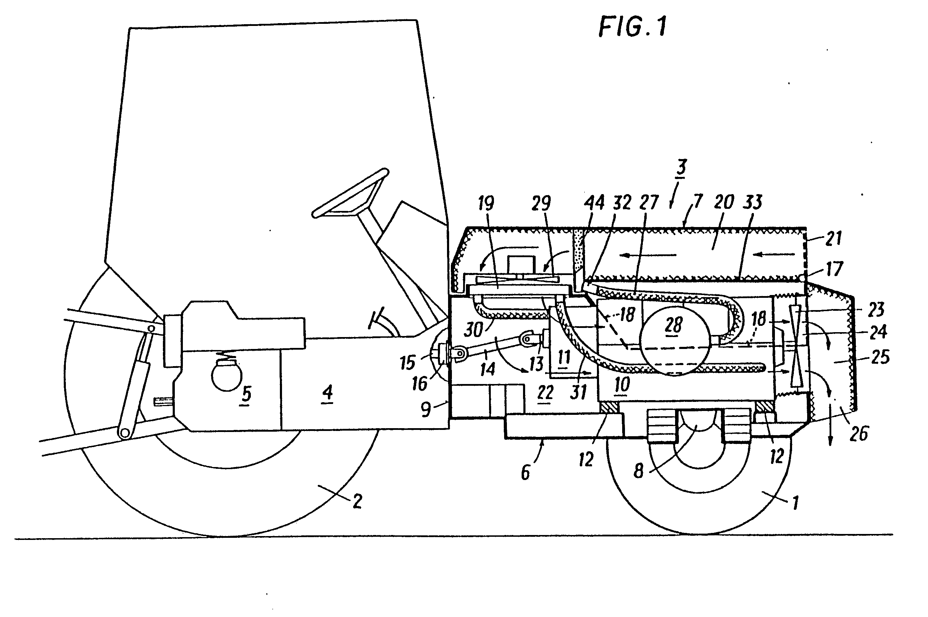

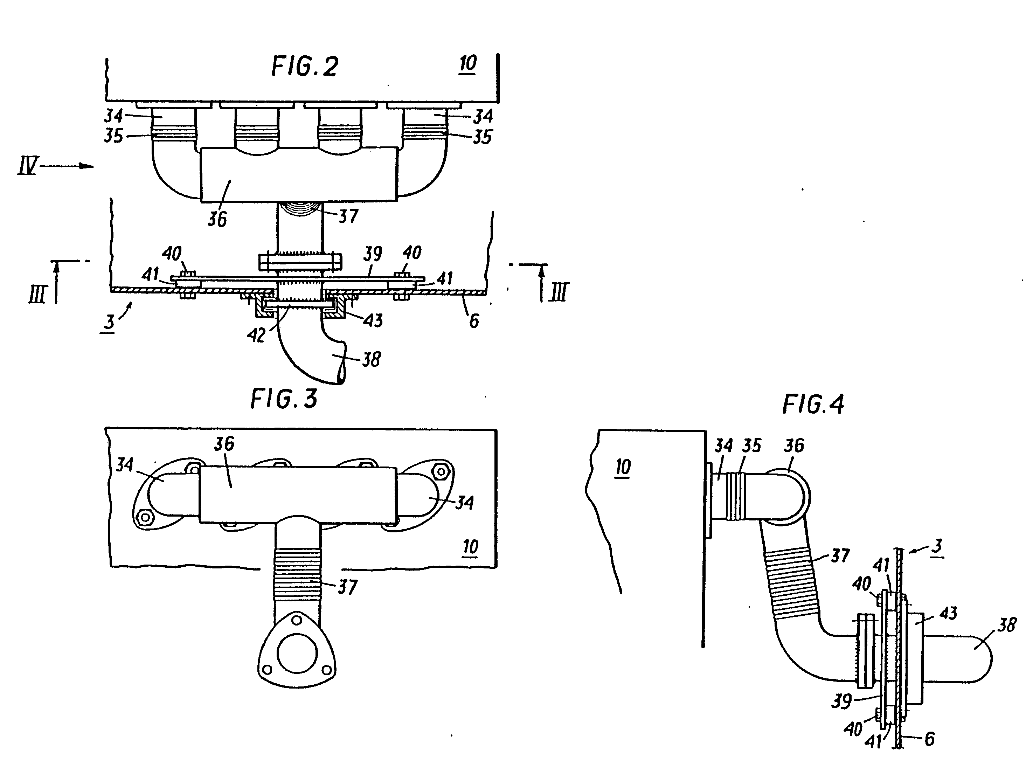

Fig. 1 zeigt eine Seitenansicht. Fig. 2, 3 und 4 zeigen ein Detail der Anordnung der Auspuffleitung, wobei Fig. 2 eine Draufsicht auf die Auspuffleitung, Fig. 3 eine Ansicht nach Linie III-III der Fig. 2 und Fig. 4 einen Schnitt nach Linie IV-IV der Fig. 2 darstellt.

In Fig. 1 stellt 1 die Vorderräder und 2 die Hinterräder eines Traktors dar. 3 ist das schalldämmende Gehäuse. 4 ist das Getriebegehäuse und 5 das Hinterachsgehäuse. Die Hinterräder 2 sind in üblicher Weise am Hinterachsgehäuse 5 aufgehängt. Das schalldämmende Gehäuse 3 besteht aus einem Unterteil 6, welcher wanenförmig ausgebildet ist und selbsttragend ist, und einem den Oberteil bildenden Deckel 7. An diesem Unterteil 6 des schalldämmenden Gehäuses 3 sind die Vorderräder 1, wie bei 8 angedeutet, aufgehängt. Das Getriebegehäuse 4 ist an die hintere Wand 9 des Unterteiles 6 des schalldämmenden Gehäuses 3 angeflanscht. Auf diese Weise wird die gesamte Tragkonstruktion des Traktors durch das schalldämmende Gehäuse 3 bzw. den Unterteil 6 desselben, das Getriebegehäuse 4 und das Hinterachsgehäuse 5 gebildet.

10 ist der Antriebsmotor und 11 das Kupplungsgehäuse. Der Antriebsmotor 10 ist am Unterteil 6 des schalldämmenden Gehäuses 3 unter Vermittlung von vier Gummilagern 12 befestigt, wodurch eine Übertragung des Körperschalles auf das schalldämmende Gehäuse 3 vermieden wird. In üblicher Weise kann der Motor auch in Abhängigkeit vom Drehmoment eine begrenzte Pendelbewegung um seine Achse ausführen. Die aus dem Kupplungsgehäuse 11 austretende Welle 13 ist über eine Gelenkwelle 14 mit der Antriebswelle 15 des Schaltgetriebes verbunden. Diese Antriebswelle 15 ist unter Vermittlung eines Lagers 16 an dem schalldämmenden Gehäuse 3 bzw. am Unterteil 6 desselben gelagert.

Der Deckel 7 ist um eine mit 17 angedeutete Querachse nach vorne hochklappbar. Die Fuge zwischen dem Unterteil 6 und dem Deckel 7 ist durch eine Linie 18 angedeutet. Hinter dem Antriebsmotor 10 ist ein Wasserrückkühler 19 horizontal liegend angeordnet. Im Deckel ist ein Luftzuführungskanal 20 vorgesehen, dessen Lufteintrittsöffnung mit 21 bezeichnet ist und gegebenenfalls durch ein Gitter abgedeckt ist. Über diesen Luftzuführungskanal 20 strömt die Luft zu dem Wasserrückkühler 19, tritt durch diesen hindurch und gelangt in den Raum 22 innerhalb des schalldämmenden Gehäuses 3. Aus diesem Raum wird die Luft durch einen Saugventilator 23 über eine Öffnung 24 in der Vorderwand des schalldämmenden Gehäuses 3 abgesaugt. Die Öffnung 24 ist durch eine Verschalung, eine sogenannte Hutze 25 abgeschirmt. Diese Hutze ist unten bei 26 offen, so daß die abgesaugte Luft nach Umleitung um 90° ausströmen kann. Durch diese Umleitung und dadurch, daß die Wandung der Hutze 25 selbst schallisoliert ist, wird die Übertragung des Luftschalles aus dem Raum 22 und auch des vom Motor ausgehenden Körperschalles weitgehend verhindert. 27 ist die Ansaugleitung für die Verbrennungsluft, welche in einen Luftfilter 28 führt.

Diese Leitung 27 ist bei 32 an den Luftansaugkanal 20 angeschlossen. Das rückgekühlte Kühlwasser wird über einen Schlauch 30 dem Motor zugeführt und über einen Schlauch 31 vom Antriebsmotor 10 zurück zum Kühler 19 geführt. Oberhalb des Wasserrückkühlers 19 kann noch ein Druckventilator 29 angeordnet sein.

Die Wandung 33 ist eine schalldämmende Wandung, welche mit schalldämmendem Material beschichtet bzw. belegt ist. Diese Wandung bildet gleichzeitig die untere Begrenzung des Luftansaugkanals 20. Die Wandung 33 ist im Deckel angeordnet und wird somit mit diesem hochgeklappt, so daß der Motor etwa bis zur halben Höhe für Wartungsarbeiten zugänglich ist. An der Oberseite des schalldämmenden Gehäuses ist im vorderen Bereich die Schalldämmung durch die Wand 33 gegeben. Im hinteren Bereich ist die Schalldämmung nur durch den Wasserrückkühler 19 gegeben, über welchen der Raum 22 mit dem Luftzuführungskanal 20 in Verbindung steht. Es kann eine durchbrochene Wand oder ein Filter 44 vorgesehen sein, welche den Teil des Luftzuführungskanals oberhalb des Wasserrückkühlers 19 vom Luftzuführungskanal 20 abgrenzt, so daß ein Austreten des Luftschalles über den Luftzuführungskanal 20 verringert wird.

An der Unterseite des Unterteiles 6 des schalldämmenden Gehäuses kann eine verschließbare Öffnung vorgesehen sein, um die Ölablaßschraube zugänglich zu machen.

In Fig. 2 bis 4 ist die Auspuffanlage dargestellt. Die Auspuffflanschen 34 des Motors 10 sind über Kompensatorrohre 35 mit dem Auspuffsammelrohr 36 verbunden. Das Auspuffsammelrohr 36 ist wieder über ein Kompensatorrohr 37 mit der Auspuffleitung 38 verbunden. Diese Kompensatorrohre sind beispielsweise von Faltenbälgen aus Stahl gebildet, welche einerseits die Übertragung des Körperschalles weitgehend unterbinden und anderseits geringe Bewegungen des Motors relativ zum schallisolierenden Gehäuse 3 zulassen. An dem Auspuffrohr 38 ist ein Quersteg 39 angeschweißt, welcher über Schrauben 40 unter Zwischenschaltung von Gummiblöcken 41 am schalldämmenden Gehäuse 3 bzw. am Unterteil 6 desselben festgelegt ist. Das Auspuffrohr 38 weist weiters einen Ringflansch 42 auf, welcher von einer Ringnut einer am schalldämmenden Gehäuse 3 bzw. am Unterteil 6 desselben festgelegten Muffe 43 umgriffen wird. Auf diese Weise ist eine Labyrinthdichtung geschaffen, welche den Austritt von Luftschall verhindert. Es wird aber auch die Übertragung des Körperschalles von der Verbrennungskraftmaschine auf das schalldämmende Gehäuse vermieden, da bei einer Labyrinthdichtung ein direkter schallübertragender Kontakt der beiden gegeneinander abzudichtenden Teile vermieden ist.

**Patentansprüche**

1. Schallisolierte Anordnung einer Verbrennungskraftmaschine (10), insbesondere einer Kolbenmaschine, welche von einem schalldämmenden Gehäuse (3) unter Freilassung einer Lufteintrittsöffnung (21) für Kühlluft und Verbrennungsluft und einer Luftaustrittsöffnung (24) für die Abfuhr der Kühlluft allseitig umschlossen ist, für Kraftfahrzeuge, insbesondere Traktoren, wobei zumindest der untere Teil (6) des schalldämmenden Gehäuses (3) mit dem Fahrzeugrahmen bzw. Fahrzeugkörper starr verbunden ist, dadurch gekennzeichnet, daß der untere Teil (6) des schalldämmenden Gehäuses (3) so weit selbsttragend ausgebildet ist, daß er das Gewicht der Verbrennungskraftmaschine (10) tragen kann, daß die Verbrennungskraftmaschine (10) unter Zwischenschaltung von den Körperschall dämmenden Elementen (12) an dem unteren Teil (6) des schalldämmenden Gehäuses (3) gelagert ist, daß bei schwimmend bzw. pendelnd gelagerter Verbrennungskraftmaschine (10) diese relativ zum schalldämmenden Gehäuse (3) beweglich ist und daß die Verbrennungskraftmaschine (10) getrennt vom Getriebegehäuse (4) in dem schalldämmenden Gehäuse (3) gelagert ist und die Motorwelle bzw. die Kupplungswelle (13) über eine Gelenkwelle (14) mit dem Getriebe (4) verbunden ist, wobei eine das Drehmoment auf das Getriebe (4) übertragende Welle (15) am schalldämmenden Gehäuse (3, 9) gelagert ist.

2. Anordnung nach Anspruch 1, dadurch gekennzeichnet, daß das Getriebegehäuse an das schalldämmende Gehäuse angeflanscht ist.

3. Anordnung nach Anspruch 1 oder 2, dadurch gekennzeichnet, daß im Falle eines Traktors die Vorderräder (1) am unteren Teil (6) des schalldämmenden Gehäuses (3) aufgehängt sind und das das Hinterachsgehäuse (5) tragende Getriebegehäuse (4) an das schalldämmende Gehäuse (3) angeflanscht ist.

4. Anordnung nach einem Ansprüche 1, 2 oder 3, dadurch gekennzeichnet, daß das Auspuffrohr (38) über eine den Körperschall dämmende Halterung (39, 41) mit dem schallisolierenden Gehäuse (3) verbunden und unter Zwischenschaltung eines flexiblen Kompensatorrohres (37), beispielsweise eines Faltenbalges aus Metall, an das Auspuffsammelrohr (36) des Motors (10) angeschlossen ist.

5. Anordnung nach Anspruch 4, dadurch gekennzeichnet, daß das Auspuffrohr (38) mit einem Quersteg (39) ausgebildet ist, der über körperschalldämmende Zwischenlagen (41) mit dem schalldämmenden Gehäuse (3) verbunden ist.

6. Anordnung nach einem der Ansprüche 1 bis 5, dadurch gekennzeichnet, daß zwischen dem Auspuffrohr (38) und der Durchtrittsöffnung für dasselbe im schalldämmenden Gehäuse (3) eine Labyrinthdichtung (42, 43) vorgesehen ist.

7. Anordnung nach einem der Ansprüche 1 bis 6, dadurch gekennzeichnet, daß das Auspuffsammelrohr (36) über flexible Kompensatorrohre (35), beispielsweise Faltenbälge aus Metall, an die Auspuffkanäle (34) des Motors (10) angeschlossen ist.

8. Anordnung nach einem der Ansprüche 1 bis 7, dadurch gekennzeichnet, daß an der Luftaustrittsöffnung (24) ein Saugventilator (23) angeordnet ist, der die Kühlluft aus dem schalldämmenden Gehäuse (3) absaugt und in diesem einen Unterdruck erzeugt und daß die Luftaustrittsöffnung (24) durch eine unten offene, schalldämmende Verschalung (Hutze) (25) abgeschirmt ist.

**Claims**

1. Sound-insulated arrangement of an internal-combustion engine (10), particularly a piston engine, being completely enclosed by a sound-absorbing casing (3) and only leaving free an air intake opening (21) for cooling air and combustion air and an air exit opening (24) for the exhaust of the cooling air, for motor vehicles, particularly tractors, wherein at least the lower part (6) of the sound-absorbing casing (3) is rigidly connected to the vehicle frame or vehicle body, resp., characterised in that the lower part (6) of the sound-absorbing casing (3) is made self-supporting so far that it can bear the weight of the internal-combustion engine (10), that the internal-combustion engine (10) is supported at the lower part (6) of the sound-absorbing casing (3) with elements (12) being inserted for absorbing structure-borne noise, that in case of a floatingly supported internal-combustion engine (10) said engine is movable with respect to the sound-absorbing casing (3), and that the internal-combustion engine (10) is supported in the sound-absorbing casing (3) separately from the gear box (4) and the engine shaft or the clutch shaft (13), resp., is connected with the gear box (4) via a universal-joint shaft (14) whereat a shaft (15) transmitting torque to the gear box (4) has its bearings on the sound-absorbing casing (3, 9).

2. Arrangement as claimed in claim 1, characterised in that the gear box is flanged to the sound-absorbing casing.

3. Arrangement as claimed in claim 1 or 2, characterised in that in case of a tractor the front wheels (1) are suspended on the lower part (6) of the sound-absorbing casing (3) and the gear box (4) supporting the rear axle casing (5) is flanged to the sound-absorbing casing (3).

4. Arrangement as claimed in claim 1, 2 or 3, characterised in that the exhaust pipe (38) is mounted on the sound-absorbing casing (3) via a mount (39, 41) absorbing structure-borne noise and is connected with the exhaust manifold (36) of the engine (10) through a flexible expansion joint (37), e. g. a metal bellow expansion joint.

5. Arrangement as claimed in claim 4, characterised in that the exhaust pipe (38) has a transverse web (39) being connected to the sound-absorbing casing (3) via intermediate layers (41) absorbing structure-borne noise.

6. Arrangement as claimed in any one of claims 1 to 5, characterised in that a labyrinth seal (42, 43) is provided between the exhaust pipe (38) and the opening therefor in the sound-absorbing casing (3).

7. Arrangement as claimed in any one of claims 1 to 6, characterised in that the exhaust manifold (36) is connected with the exhaust ports (34) of the engine (10) through flexible expansion joints (35), e. g. metal bellow expansion joints.

8. Arrangement as claimed in any one of claims 1 to 7, characterised in that at the air exit opening (24) a suction fan (23) is provided which sucks cooling air out of the sound-absorbing casing (3) and generates a negative pressure therein, and that the air exit opening (24) is shielded by a noise-damping shroud (25) having an open bottom.

**Revendications**

1. Montage insonorisé d'un moteur à combustion interne (10), en particulier d'un moteur à pistons, qui est entouré de tous côtés par un carter amortissant le bruit (3) avec ménagement d'une ouverture d'admission d'air (21) pour l'air de refroidissement et l'air comburant et d'une ouverture d'échappement d'air (24) pour l'évacuation de l'air de refroidissement, pour des véhicules à moteur, en particulier des tracteurs, le carter amortissant le bruit (3) étant fixé rigidement, au moins par sa partie inférieure (6), au châssis ou à la carrosserie du véhicule, caractérisé en ce que la partie inférieure (6) du carter amortissant le bruit (3) est réalisée sous forme auto-porteuse dans une mesure suffisante pour qu'elle puisse porter le poids du moteur à combustion interne (10), en ce que le moteur à combustion interne (10) est monté sur la partie inférieure (6) du carter amortissant le bruit (3) avec interposition d'éléments (12) qui amortissent le bruit dans les corps solides, en ce qu'en cas de moteur à combustion interne monté flottant ou oscillant, celui-ci est mobile par rapport au carter amortissant le bruit (3), et en ce que le moteur à combustion interne (10) est monté séparément du carter de boîte de vitesses (4) dans le carter amortissant le bruit (3) et l'arbre du moteur ou l'arbre d'embrayage (13) est relié à la boîte de vitesses (4) par un arbre articulé (14), un arbre (15) qui transmet le couple de rotation à la boîte de vitesses (4) étant monté sur le carter amortissant le bruit (3, 9).

2. Montage selon la revendication 1, caractérisé en ce que le carter de boîte de vitesses (4) est bridé au carter amortissant le bruit (3).

3. Montage selon la revendication 1 ou 2, caractérisé en ce que dans le cas d'un tracteur, les roues avant (1) sont suspendues à la partie inférieure (6) du carter amortissant le bruit (3) et le carter de boîte de vitesses (4), qui porte le carter de pont arrière (5), est bridé au carter amortissant le bruit (3).

4. Montage selon l'une quelconque des revendications 1 à 3, caractérisé en ce que le tuyau d'échappement (38) est fixé au carter amortissant le bruit (3) au moyen d'une attache (39, 41) amortissant le bruit dans les corps solides, et en ce qu'il est raccordé au collecteur d'échappement (36) du moteur (10) avec interposition d'un tube compensateur flexible (37), par exemple d'un soufflet plissé en métal.

5. Montage selon la revendication 4, caractérisé en ce que le tuyau d'échappement (38) est muni d'un flasque transversal (39) qui est fixé au carter amortissant le bruit (3) par des pièces intercalaires (41) qui amortissent le bruit dans les corps solides.

6. Montage selon l'une quelconque des revendications 1 à 5, caractérisé en ce qu'il est prévu une garniture d'étanchéité à labyrinthe (42, 43) entre le tuyau d'échappement (38) et l'ouverture de passage formée pour celui-ci dans le carter amortissant le bruit (3).

7. Montage selon l'une quelconque des revendications 1 à 6, caractérisé en ce que le collecteur d'échappement (36) est raccordé aux orifices d'échappement (34) du moteur (10) par des tubes compensateurs flexibles (35), par exemple des soufflets plissés en métal.

8. Montage selon l'une quelconque des revendications 1 à 7, caractérisé en ce qu'il est disposé, au niveau de l'ouverture d'échappement d'air (24), un ventilateur aspirant (23) qui aspire l'air de refroidissement à partir du carter amortissant le bruit (3) et crée une dépression dans celui-ci, et en ce que l'ouverture d'échappement d'air (24) est recouverte par une boîte d'insonorisation (silencieux) (25) ouverte vers le bas.

FIG.1

0 074 941

FIG.2

FIG.3

FIG.4